Europäisches Patentamt

**European Patent Office**

**Office européen des brevets**

(11) Publication number: **0 174 281**
A2

(12) # EUROPEAN PATENT APPLICATION

(21) Application number: **85830039.5**

(22) Date of filing: **19.02.85**

(51) Int. Cl.⁴: **C 04 B 41/00**
**E 04 G 23/00**

(30) Priority: **05.09.84 IT 4880484**

(43) Date of publication of application:
**12.03.86 Bulletin 86/11**

(84) Designated Contracting States:
**AT BE CH DE FR GB LI NL SE**

(71) Applicant: **Pouchain, Maurizio**
**Via Casal del Marmo, 660**
**I-00166 Roma(IT)**

(71) Applicant: **Medolago Albani, Ludovico, Prof.**
**Via Sabrata, 22**
**I-00198 Roma(IT)**

(72) Inventor: **Pouchain, Maurizio**
**Via Casal del Marmo, 660**
**I-00166 Roma(IT)**

(72) Inventor: **Medolago Albani, Ludovico, Prof.**
**Via Sabrata, 22**
**I-00198 Roma(IT)**

(74) Representative: **Mascioli, Alessandro, Prof.Dr.**
**c/o A.N.D.I. Associazione Nazionale degli Inventori Via Lima, 35**
**I-00198 Roma(IT)**

(54) **A process for the decontamination and cleaning of monumental marble works.**

(57) A process for the decontamination and cleaning of monumental marble works, consisting in the immersion into deionized water of said works, said water being pushed by a pump for the circulation in a column containing ionic exchange resins which separate the $SO_4{-}$ ione as quickly as possible from said solution, said ione deriving from the dissolving of the calcium sulphate so that the calcium bicarbonate formed following to the dissolving of the sulphate contained in the work immediately precipitates at values of $PH = 7 \div 7.5$ in the form un undissolvable carbonate, determining the formation of a superficial crust that can be easily removed with a distilled water jet so as to leave the clean marble underneath.

EP 0 174 281 A2

"A process for the decontamination and cleaning of monu- 0174281

mental marble works"

Ing. Maurizio POUCHAIN        Prof. Ludovico MEDOLANI ALBANI

Via Casal del Marmo, 660      Via Sabrata, 22

ROMA (Italy)                  ROMA (Italy)

The present invention concerns a process for the decontamination and cleaning of monumental marble works, based on the continuous abstraction from the liquid into which the pieces to be treated are immersed of the anions of the soluble salts, by means of exchanging resins.

In those countries with a cold or temperate climate the alteration of marble, or more generally of all those stones with a carbonate component, is nearly always characterized in the formation of a thin black crust, a few millimeters thick, strongly adherent to the substratum. The outermost part of said crust, of about 1-2 millimeters thickness, mainly consists in calcium sulphate, with carbon deposits, traces of quartz, analcime, augite and most rare calcite. In the innermost part the carbon component increases with respect to the calcium sulphate.

The processes for decontamination and cleaning used until now provide the application onto the pieces to be treated of a poultice of absorbing materials, like sea-foam or attapulgite clay, or paper pulp free of soluble salts

- 2 -

0174281

or cotton wool. Said processes are obviously long lasting, expensive and request highly skilled workmen.

Also other processes, e.g. saturation with water, are used for cleaning the monuments from their superficial
crusts, but said methods are not only very slow, little .
practical and rather expensive; they also cause the penetration of water - rich with dissolved salts - in the
porosities and/or in the microfractures of the stone,
so as to cause again, due to the following evaporation,
the precipitation of a part of the soluble salts into
the stone, thus supporting the further deterioration
thereof.

It is the aim of the present invention to realize a process for the decontamination and cleaning of monumental
marble works that eliminates the danger of a new salt
deposit inside the stone, thus avoiding any degradation.

According to the present invention, this aim is reached immersing the works into deionized water, pushed by
a pump for the circulation in a column containing ionic ·
exchange resins for separating, as quickly as possible,
the $SO_4-$ ione from said solution, said ione deriving
from the dissolving of the calcium sulphate so that the
calcium bicarbonate formed following to the dissolving
of the sulphate contained in the work immediately precipitates at values of PH = 7 ÷ 7.5 in the form of undissolvable carbonate, determining the formation of a superficial crust that can be easily removed with a distilled
water jet so as to leave the clean marble underneath.

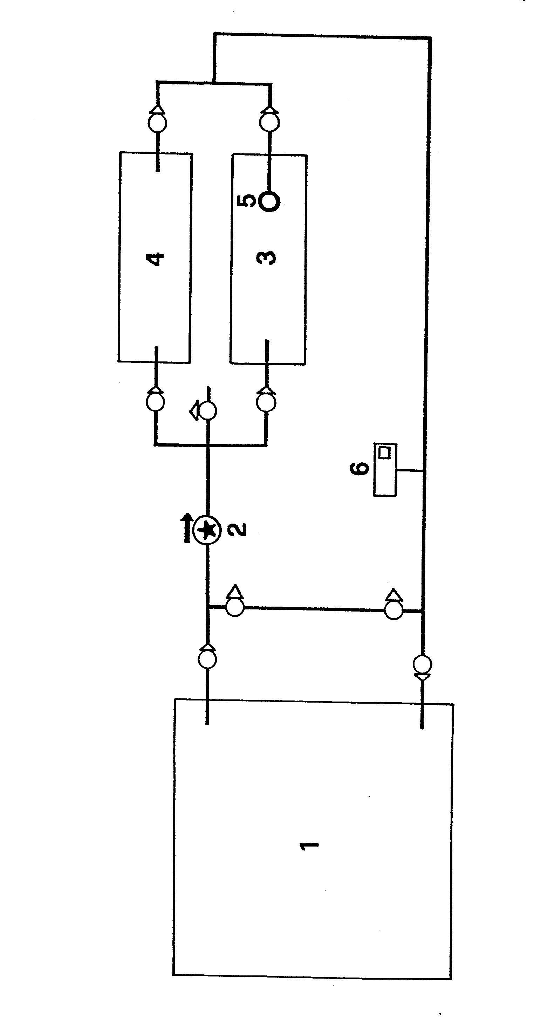

A scheme of a circuit for the realization of above mentioned process is shown for exemplifying and not limiting purposes in the attached drawing.

Relating to the details of the drawing, 1 shows a basin
full of deionized water into which the marble works are
immersed; said basin 1 is connected to a centrifugal
pump 2 that makes the water circulate through the columns-shaped container 3 of ionic exchange resin, provided with a filter 5, placed in parallel position to an
auxiliary basin 4 from where the water returns to basin
1 closing the circuit, which is also provided with a
PH-meter 6.

According to the present invention, the ionic exchange
resin contained in 3 is preferably of the "GEL" kind,
meanly basic and consisting in an acrylic copolymer
with cross connections showing an $- N(R)_2$ group as the
functional group.

From the point of view of the iones to exchange, said
resin may be provided in the form of free basis, i.e.
able to exchange OH- groups, as well as in the bicarbonate form, able to exchange $-HCO_3-$ iones.

The PH interval in which said resin determins the maximum efficacy in this process os from O to 7, but it is still efficient at PH = 7 ÷ 8.

The application of the process according to the present invention with the described means shows the advantage of being very quick and of determining the complete removing of the soluble salts and of the carbon components, also in the case of particularly carved works.

CLAIMS

1. A process for the decontamination and cleaning of monumental marble works, wherein said works are immersed in
a closed circuit of deionized water pushed by a pump in
columns of ionic exchanging resins for the continuous abstraction of the anions in the soluble salts, so that
the calcium bicarbonate formed following to the dissolving of the sulphate present in the work immediately precipitates at values of PH = 7 ÷ 7.5 in the form of undissolvable carbonate, determining the formation of a
superficial crust that can be easily removed with a distilled water jet so as to leave the clean marble underneath.

2. A process for the decontamination and cleaning of monumental marble works according to claim 1, wherein the
anionic exchange resin is of the "GEL" kind, meanly basic and consisting in an acrylic copolymer with cross
connections showing an $-N(R)_2$ group as the functional
group.

3. A process for the decontamination and cleaning of monumental marble works according to the precedent claims,
characterized in the presence of resins in the form of
free basis, i.e. able to exchange OH- groups.

4. A process for the decontamination and cleaning of monumental marble works according to claims 1 and 2, cha -
racterized in the presence of resin in the form of bi-

carbonate able to exchange $-HCO_3-$ iones.

5. A process for the decontamination and cleaning of monumental marble works according to the precedent claims realized with a closed circuit, characterized in a basin (1) full of deionized water into which the marble works are immersed, said basin (1) being connected to a centrifugal pump (2) that makes the water circulate through the columns-shaped container (3) of ionic exchange resin, provided with a filter (5) placed in a parallel position to an auxiliary basin (4), from where the water returns to basin (1) closing the circuit, being also provided with a PH-meter (6).

6. A process for the decontamination and cleaning of monumental marble works according to the precedent claims, wherein PH = 0 ÷ 8.